# EUROPÄISCHE PATENTSCHRIFT

(11) **EP 0 509 143 B1**
(45) Veröffentlichungstag und Bekanntmachung des Hinweises auf die Patenterteilung: **28.09.1994**
(21) Anmeldenummer: 91120928.6
(22) Anmeldetag: 06.12.1991
(51) Int. Cl.: B23B 31/08, B23G 1/46

(54) **Gewindescheidapparat**
Tapping apparatus
Appareil à tarauder

(30) Priorität: 17.04.1991 DE 4112467
(43) Veröffentlichungstag der Anmeldung: 21.10.1992
(73) Patentinhaber: OTTO BILZ, Werkzeugfabrik GmbH & Co., 73760 Ostfildern (DE)
(72) Erfinder: Blessing, Matthias H., W-7302 Ostfindern 1 (DE)
(74) Vertreter: Kratzsch, Volkhard, Dipl.-Ing.

(56) Entgegenhaltungen:
- DE-A- 2 801 825
- FR-A- 2 612 435
- GB-B- 2 090 176
- US-A- 3 999 642
- US-A- 4 307 584

## Beschreibung

Die Erfindung bezieht sich auf einen Gewindeschneidapparat gemäß dem Oberbegriff des Patentanspruchs 1, vgl. US-A- 3999642.

Es sind Gewindeschneidapparate bekannt, bei denen die umschaltbare, formschlüssige Kupplungseinrichtung als Klauenkupplung ausgebildet ist. Diese und andere Gestaltungen haben den Nachteil, daß die Kupplungseinrichtung einem großen Verschleiß unterworfen ist. Dies ergibt sich aus folgendem. Gewindeschneidapparate ohne oder mit Drehrichtungsumkehrgetriebe zum Gewindeschneiden mit hohen Drehzahlen und ohne Drehrichtungsänderung der antreibenden Maschinenspindel werden heute mit hoher Drehzahl angetrieben, z.B. in der Größenordnung von 2.500 U/min. Dabei werden an sämtliche drehmomentübertragenden Bauteile hohe Anforderungen gestellt. Beim Einschneiden des Gewindes z.B. im Rechtslauf ist die Kupplungseinrichtung so geschaltet, daß dabei der erste Kupplungsteil mit dem Schaltglied und somit mit dem drehfest damit gekuppelten Abtriebsteil in drehmomentübertragender Verbindung steht. Hingegen ist der zweite Kupplungsteil nicht mit dem Schaltglied gekuppelt. Eine Drehrichtungsänderung auf Linkslauf, z.B. zum Herausdrehen des Gewindebohrers, wird durch Axialverschiebung des Schaltgliedes und Auskupplung bei dem ersten Kupplungsteil und Einkuppeln beim zweiten Kupplungsteil erreicht. Dabei liegt eine große Drehzahldifferenz vor, weswegen eine große Beschleunigung erfolgen muß. Hier ergibt sich das Problem, ein verschleißarmes Kuppeln des Schaltgliedes mit dem zweiten Kupplungsteil zu erreichen und außerdem den großen Drehzahldifferenzen und somit großen notwendigen Beschleunigungen derart Rechnung zu tragen, daß der Verschleiß der einzelnen Bauteile möglichst gering ist. Oberstes Ziel ist es, den Gewindeschneidapparat so auszulegen, daß beim Bohren von Gewindebohrungen eine möglichst genaue Gewindetiefe erreichbar ist und dies bei den genannten hohen Drehzahlen, mit denen hier gearbeitet wird.

Der Erfindung liegt daher die Aufgabe zugrunde, einen Gewindeschneidapparat der eingangs genannten Art zu schaffen, der einfach, kostengünstig und platzsparend sowie betriebssicher ist und vor allem ein verschleißarmes und möglichst sprunghaftes Kuppeln ermöglicht.

Die Aufgabe ist bei einem Gewindeschneidapparat der eingangs genannten Art gemäß der Erfindung durch die Merkmale im Kennzeichnungsteil des Anspruchs 1 gelöst.

Durch die Erfindung ist ein möglichst verschleißarmes Kuppeln unter Last, und zwar Auskuppeln und Einkuppeln, erreicht, wodurch die Belastung der einzelnen Bauteile wesentlich reduziert und deren Lebensdauer erheblich gesteigert ist. Der Gewindeschneidapparat gemäß der Erfindung macht es möglich, relativ genaue Gewindetiefen beim Bohren von Gewindebohrungen zu erreichen und dennoch mit den gewünschten hohen Drehzahlen z.B. in der Größenordnung von 2.500 U/min zu arbeiten. Die einzelnen Kupplungsglieder sind jeweils elastisch abgefangen, so daß sie beim Kuppeln so lange axial und elastisch ausweichen können, bis jeweils die formschlüssige Verbindung zur Übertragung des Drehmomentes hergestellt ist. Durch die Dämpfungseinrichtung zwischen dem Schaltglied und dem Abtriebsteil wird eine weitere Verschleißreduzierung erreicht, da bei Lastwechseln die Dämpfungseinrichtung Stöße abdämpfen kann und dadurch ein weiches Kuppeln ermöglicht ist. Dies gilt sowohl in Eindrehrichtung als auch in Ausdrehrichtung. Ferner ist die jeweils zu beschleunigende Masse in zwei Teilmassen aufgeteilt, von denen die kleine Teilmasse aus dem Schaltglied und den Kupplungsgliedern darin besteht, während die große Teilmasse aus dem Abtriebsteil, insbesondere der Spindel, mit deren Mitnehmern zur Kupplung mit den Mitnehmern des Schaltgliedes und aus den Elementen im Bereich der Aufnahme besteht, die dem Spannen und/oder Wechseln des Werkzeuges, insbesondere des Gewindebohrers, dienen, also z.B. ein Futterkopf, eine Spannzange, ein Schnellwechseleinsatz od. dgl. Bei Richtungsänderungen muß jeweils nur die kleine Masse mit geringem Beschleunigungsweg beschleunigt werden, was im Bereich der Elastizität der jeweiligen Kupplungsglieder liegt und aufgenommen werden kann. Die zu beschleunigende große andere Teilmasse wird dagegen über die Dämpfungseinrichtung mit großem Beschleunigungsweg sanft beschleunigt, so daß die Beschleunigung jeweils abgedämpft geschieht.

Nach dem Anspruch 1 hat der Gewindeschneidapparat ebenfalls kein Drehrichtungsumkehrgetriebe und nur einen Kupplungsteil, in den beim Einkuppeln der Kupplungseinrichtung deren Kupplungsglieder eingreifen. Nach Einschneiden des Gewindes wird hierbei über die Kupplungseinrichtung durch Rückzug der Maschinenspindel zunächst entkuppelt, so daß die Maschinenspindel abgebremst und maschinenseitig deren Drehrichtung umgekehrt werden kann, woraufhin die Maschinenspindel in dieser gegensinnigen Drehrichtung umlaufen kann. Hierzu wird die Kupplungseinrichtung wieder in Kupplungseingriff gebracht, wodurch bei der gegensinnigen Maschinenspindeldrehung der Gewindebohrer herausgedreht wird. In dieser Gestaltung ist der Gewindeschneidapparat einfacher. Er hat nur einen Kupplungsteil. Weitere besondere Erfindungsmerkmale und Ausgestaltungen ergeben sich aus den Ansprüchen 2 bis 24.

Ist der Gewindeschneidapparat gemäß Anspruch 5 mit einem Drehrichtungsumkehrgetriebe versehen, kann nach Einschneiden des Gewindes und zum Herausdrehen des Gewindebohrers die Drehrichtung der Maschinenspindel beibehalten werden. Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:
- Fig. 1: einen schematischen axialen Längsschnitt eines Gewindeschneidapparates in der zum Gewindeschneiden im Rechtssinn eingekuppelten Stellung,
- Fig. 2: einen schematischen axialen Längsschnitt entsprechend demjenigen in Fig. 1, bei dem der Gewindeschneidapparat sich in einer nicht gekuppelten Zwischenstellung befindet,
- Fig. 3: einen schematischen axialen Längsschnitt des Gewindeschneidapparats in Fig. 1 in einer anderen gekuppelten Stellung zum Herausdrehen des Gewindebohrers im Linkssinn,
- Fig. 4: einen schematischen Schnitt entlang der Linie IV - IV in Fig. 1.

In den Zeichnungen ist ein Gewindeschneidapparat 10 gezeigt, der einen Antriebsteil 11 aufweist, welcher mittels einer nicht weiter gezeigten Maschinenspindel einer Werkzeugmaschine umlaufend antreibbar und davon axial bewegbar ist. Der Antriebsteil 11 weist einen Schaft 12 mit einem sich daran anschließenden zylindrischen Gehäuseteil 13 auf, der mittels Lagern 14 in einem maschinenseitig gehaltenen Gehäuse 15 drehbar gelagert ist. Auf dem Schaft 12 ist ein das Einstecken in die nicht gezeigte Maschinenspindel ermöglichendes, daran angepaßtes Verbindungsteil aufbringbar, z.B. eine Stellhülse, ein Kegel od.dgl.

Der Gewindeschneidapparat 10 weist ferner einen relativ zum Antriebsteil 11 axial verschiebbaren Abtriebsteil 16 auf, der hier aus einer Spindel 17 besteht, die den Gewindeschneidapparat im Zentrum nahezu auf der gesamten Länge durchsetzt und an dem Ende, das der nicht gezeigten Maschinenspindel abgewandt ist, aus dem Gewindeschneidapparat 10 axial übersteht und dort eine allgemein mit 18 bezeichnete Aufnahme z.B. für ein Spannfutter zum direkten oder indirekten Aufnehmen eines nicht gezeigten Gewindebohrers aufweist. Der Abtriebsteil 16 enthält Kanäle 19, die mit im Antriebsteil 11 enthaltenen Kanälen 20 in Verbindung stehen und der Hindurchführung eines Kühl- und Schmiermittels für die innere Kühlung des Gewindebohrers dienen.

Der Gewindeschneidapparat 10 weist ferner ein Drehrichtungsumkehrgetriebe 21 auf, das vom Antriebsteil 11 angetrieben wird. Im einzelnen weist das Drehrichtungsumkehrgetriebe 21 ein mit dem Antriebsteil 11 drehfest verbundenes und davon angetriebenes Kegelrad 22 auf, das mit z.B. drei in Umfangsrichtung in gleichen Winkelabständen voneinander angeordneten Kegelrädern 23 in Eingriff steht, die drehbar in einem Ring 24 gelagert sind, der fest am Gehäuse 15 angebracht ist und nicht umläuft, so daß bei z.B. im Rechtssinn angetriebenem Kegelrad 22 dadurch die drei Kegelräder 23 um ihre Lagerachse drehend angetrieben werden. Das Drehrichtungsumkehrgetriebe 21 weist außerdem einen Abtrieb 25 in Gestalt eines Kegelrades 26 auf, das mit den drei Kegelrädern 23 ebenfalls in Eingriff steht. Dieses Kegelrad 26 ist koaxial zum Kegelrad 22 angeordnet und steht diesem gegenüber. Bei rechtsdrehendem Kegelrad 22 wird somit über die Kegelräder 23 eine Drehrichtungsumkehr beim darüber angetriebenen anderen Kegelrad 26 erreicht. Das Kegelrad 26 dreht also bei rechts angetriebenem Kegelrad 22 gegensinnig dazu.

Im Gewindeschneidapparat 10 ist ferner eine umschaltbare formschlüssige Kupplungseinrichtung 27 enthalten. Diese weist ein Schaltglied 28 auf, das mit dem Abtriebsteil 16 in Form der Spindel 17 verbunden ist und letzteres antreibt. Zur Kupplungseinrichtung 27 gehört ferner ein vom Antriebsteil 11, insbesondere von dessen Gehäuseteil 13, angetriebener Kupplungsteil 29 und ein weiterer Kupplungsteil 30, der mit dem Abtrieb 25, insbesondere Kegelrad 26, des Drehrichtungsumkehrgetriebes 21 verbunden ist. Der erste Kupplungsteil 29 sitzt im Gehäuseteil 13 und enthält auf der Außenseite z.B. eine achsparallele Nut 31, in die ein entsprechender Vorsprung 32 im Inneren des Gehäuseteiles 13 formschlüssig eingreift, wodurch die Drehmitnahme geschieht. Der Vorsprung 32 kann am Gehäuseteil 13 angeformt sein oder aus einer in einer Nut des Gehäuseteils 13 enthaltenen Paßfeder bestehen. Das Kegelrad 22 ist auf dem ersten Kupplungsteil 29 zentriert und damit drehfest verbunden, z.B. mittels eines radial nach innen gerichteten Vorsprunges 33 am Kegelrad 22, der in eine achsparallele Nut 34 des ersten Kupplungsteiles 29 formschlüssig eingreift.

Der zweite Kupplungsteil 30 ist mittels eines Lagers 35 im Gehäusedeckel 36 drehbar gelagert. Auf seiner Außenfläche ist der Abtrieb 25 in Form des Kegelrades 26 zentriert, das z.B. mittels eines radialen Vorsprunges 37, der in eine achsparallele Nut 38 des zweiten Kupplungsteiles 30 eingreift, drehfest damit verbunden ist, so daß dadurch das Kegelrad 36 und der zweite Kupplungsteil 30 die gleiche Antriebsbewegung ausführen, bei rechts angetriebenem Antriebsteil 11 also z.B. gegensinnig dazu umlaufen.

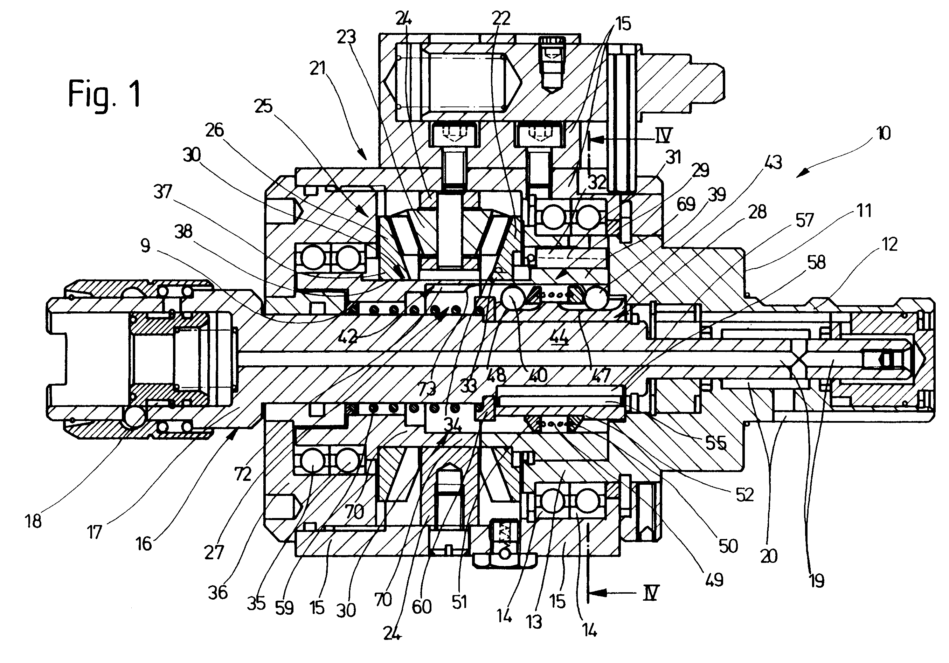

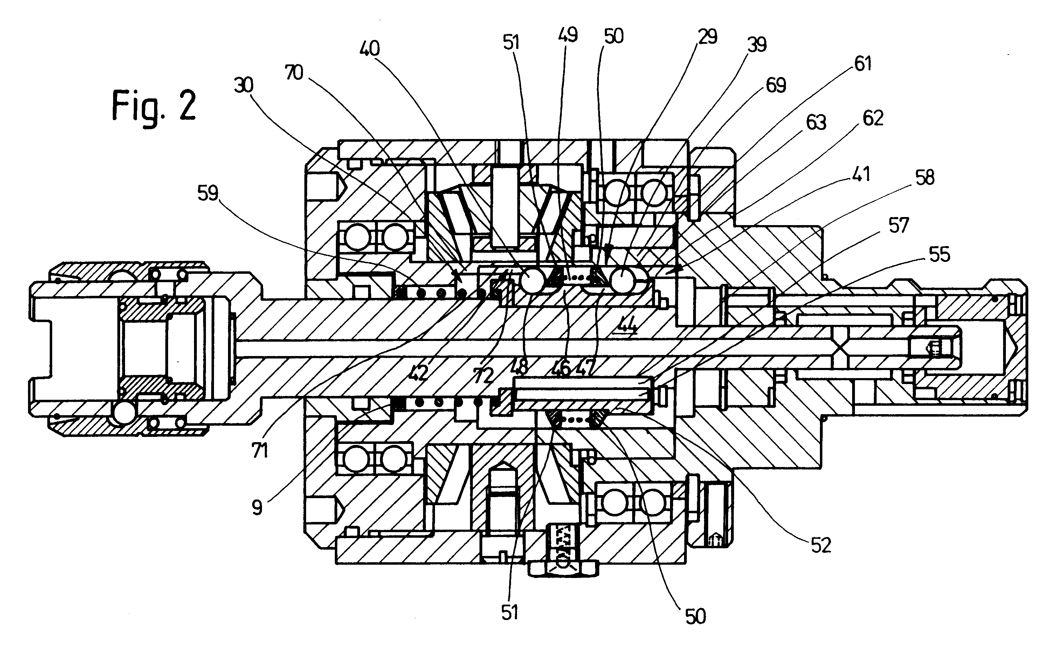

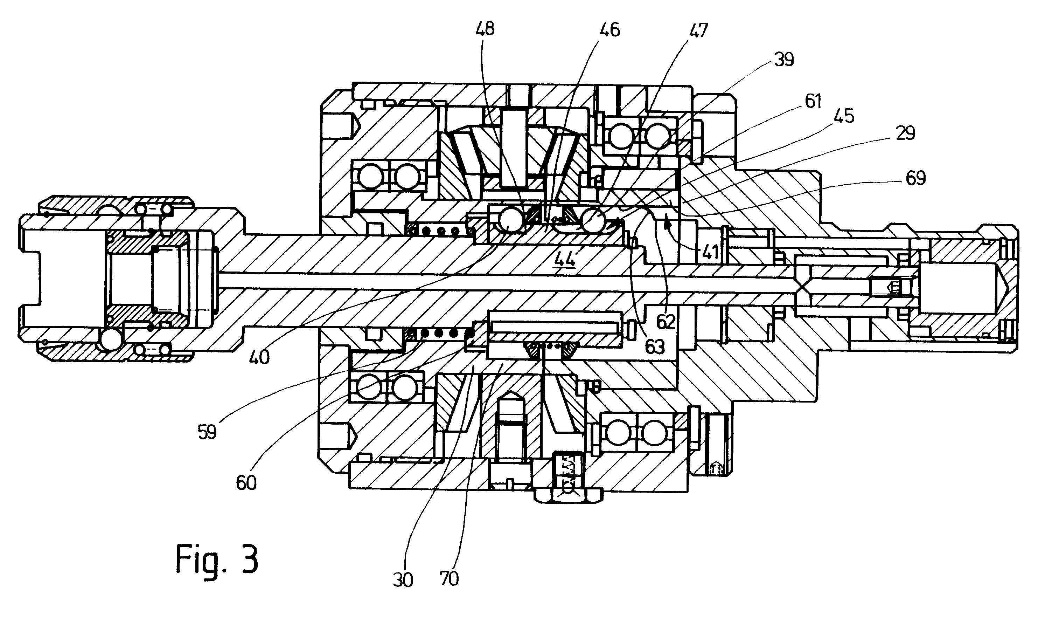

Aufgrund einer axialen Relativverschiebung zwischen dem Abtriebsteil 16, also der Spindel 17, mit Schaltglied 28 darauf einerseits und den Kupplungsteilen 29, 30 andererseits ist der erste Kupplungsteil 29, wie in Fig. 1 gezeigt ist, oder statt dessen der zweite Kupplungsteil 30, wie in Fig. 3 gezeigt ist, mit dem Schaltglied 28 in Eingriff bringbar oder statt dessen eine in Fig. 2 gezeigte nicht angetriebene Zwischenstellung einstellbar.

Das Schaltglied 28 weist darin formschlüssig gehaltene und geführte Kupplungsglieder 39,40 auf, die wahlweise mit zugeordneten Kupplungselementen 41 bzw. 42 am ersten Kupplungsteil 29 bzw. zweiten Kupplungsteil 30 in formschlüssigen Kupplungseingriff bzw. in eine dazwischen befindliche Zwischenstellung bringbar sind. Die Kupplungsglieder 39,40 sind hier als Kugeln ausgebildet. Die gesamte Kupplungseinrichtung 27 ist als Kugelkupplung ausgebildet.

Das Schaltglied 28 ist koaxial zu den beiden Kupplungsteilen 29 und 30 und axial derart zwischen diesen Kupplungsteilen 29,30 angeordnet, daß das Schaltglied 28 in einer axialen Relativstellung des Abtriebsteiles 16, insbesondere der Spindel 17, sich in einer Axialposition in Eingriff mit dem ersten Kupplungsteil 29, wie in Fig. 1 gezeigt ist, und in einer anderen axialen Relativstellung des Abtriebsteiles 16, insbesondere der Spindel 17, sich in einer anderen entgegengerichteten Axialposition und in Eingriff mit dem zweiten Kupplungsteil 30 befindet, die in Fig. 3 gezeigt ist. Das Schaltglied 28 ist als Kugelhülse 43 ausgebildet, die auf einem Absatz 44 der Spindel 17 zentriert ist. Die Kugelhülse 43 enthält auf ihrer Außenseite z.B. drei in etwa gleichen Umfangswinkelabständen voneinander angeordnete, im wesentlichen achsparallele Nuten 45, die z.B. jeweils, wie Fig. 1 zeigt, durch einen mit der Kugelhülse 43 z.B. einstückigen Vorsprung 46 in zwei Nutabschnitte 47 und 48 unterteilt und voneinander getrennt sind. Bei einem nicht gezeigten Ausführungsbeispiel ist in jeder Nut 45 zumindest ein Kupplungsglied, z.B. eine Kugel, formschlüssig und beweglich gehalten, die mit einem Kugelteil über die Außenseite des Schaltgliedes 28, insbesondere der Kugelhülse 43, übersteht.

Beim gezeigten Ausführungsbeispiel sind in jeder Nut 45 zwei Kupplungsglieder 39,40, insbesondere Kugeln, formschlüssig und beweglich gehalten, die mit einem Kugelteil über die Außenseite des Schaltgliedes 28, insbesondere der Kugelhülse 43, überstehen, wobei die Kugel 39 im Nutabschnitt 47 und die Kugel 40 im Nutabschnitt 48 enthalten ist. Die Kugeln 39,40 sind in der Nut 45 axial beabstandet. Die drei Kupplungsglieder 39, insbesondere Kugeln, sind dabei als Eindrehschaltkugeln vorgesehen und dem ersten Kupplungsteil 29 zugeordnet. Sie sind mit dem ersten Kupplungsteil 29 in formschlüssigen Eingriff bringbar, wie Fig. 1 zeigt, bzw. damit außer Eingriff bringbar.

Die drei anderen Kupplungsglieder 40, insbesondere Kugeln, sind als Ausdrehschaltkugeln vorgesehen und dem zweiten Kupplungsteil 30 zugeordnet und mit diesem in formschlüssigen Eingriff bringbar bzw. außer Eingriff damit bringbar.

Auf dem Axialbereich zwischen diesen beiden Kugelgruppen 39 und 40 ist eine das Schaltglied 28 umgebende Feder 49, z.B. eine zylindrische Schraubenfeder, angeordnet, mittels der beide Kugelgruppen 39 und 40 in etwa achsparalleler Richtung voneinanderweg federelastisch beaufschlagt sind. Jeder Kugelgruppe 39,40 ist ein Ring 50 bzw. 51 auf dem Schaltglied 28 zugeordnet, der mittels der Feder 49 gegen die jeweilige Kugel 39 bzw. 40 angedrückt ist und auf der der jeweiligen Kugel 39 bzw. 40 zugewandten Seite von innen nach außen abgeschrägt ist.

Der Ring 50, der der Eindrehschaltkugel 39 zugeordnet ist, ist an einem Radialvorsprung 52, z.B. einer Radialschulter, der Kugelhülse 43 und dabei je nach Position der Eindrehschaltkugeln 39 innerhalb des zugeordneten Nutabschnitts 47 in axialem Abstand von der Eindrehschaltkugel 39 formschlüssig abstützbar. In der in Fig. 1 gezeigten Position liegt der Ring 50 an diesem Radialvorsprung 52 formschlüssig an, so daß die Eindrehschaltkugeln 39 z.B. nicht unter der Beaufschlagung durch die Feder 49 stehen.

Wenn auch beim gezeigten Ausführungsbeispiel jede Nut 45 über den Vorsprung 46 in zwei Nutabschnitte 47 und 48 unterteilt ist, versteht es sich gleichwohl, daß bei einem anderen, nicht gezeigten Ausführungsbeispiel die Nut 45 auch in Axialrichtung durchgehend gestaltet sein kann, wobei auch dann in jeder durchgehenden Nut 45 zwei Kupplungsglieder 39 bzw. 40 enthalten sein können. Beim gezeigten Ausführungsbeispiel ist jedes Kupplungsglied 39,40, insbesondere jede Kugel, in einer eigenen Längsnut in Gestalt des Nutabschnitts 47 bzw. 48 enthalten. Jeder Nutabschnitt 47 bzw. 48 weist ersichtlich ein größeres Axialmaß auf als es dem Durchmesser der Kugel 39 bzw. 40 entspricht.

Der Nutabschnitt 47, in dem die Eindrehschaltkugel 39 enthalten ist, weist z.B. ein um das zwei- bis dreifache, z.B. 2,5-fache, größeres Axialmaß als der Durchmesser der Kugel 39 auf.

Der Nutabschnitt 48, in dem die Ausdrehschaltkugel 40 enthalten ist, weist ein etwa um das ein- bis zweifache, z.B. 1,5-fache, größeres Axialmaß als der Durchmesser der Kugel 40 auf. Auf diese Weise können die Kugeln 39 bzw. 40 innerhalb des zugeordneten Nutabschnitts 47 bzw. 48 sich in Axialrichtung bewegen.

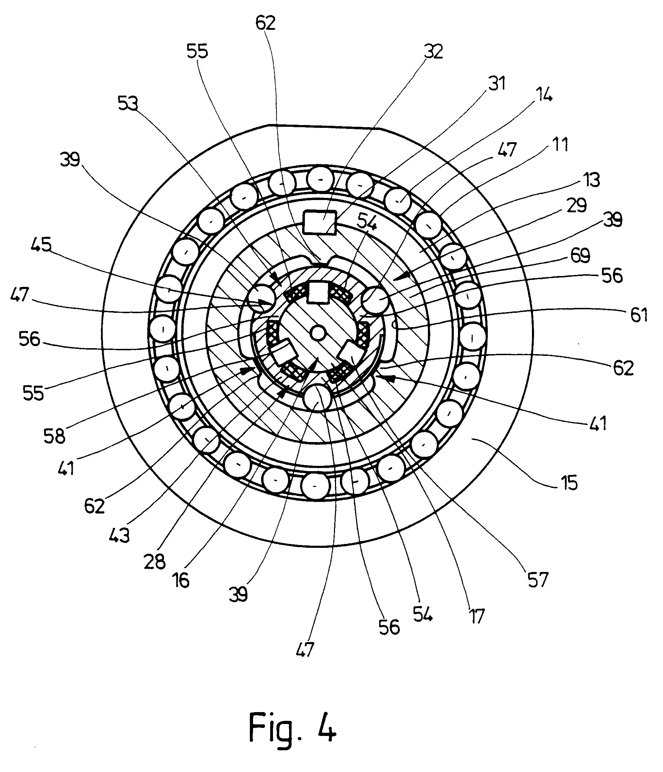

Das Schaltglied 28, insbesondere die Kugelhülse 43, ist auf dem Abtriebsteil 16 in Form der Spindel 17 zentriert und mit diesem in Umfangsrichtung formschlüssig gekuppelt. Diese formschlüssige Kupplung in Umfangsrichtung ist mit einer zwischen dem Schaltglied 28, insbesondere der Kugelhülse 43, und dem Abtriebsteil 16, insbesondere der Spindel 17, in vorzugsweise beiden Drehrichtungen federelastischen Dämpfungseinrichtung 53 versehen, die in Umfangsrichtung federnde Dämpfer 54, z.B. federnde Federelemente 55, aufweist. Die Federelemente 55 können z.B. aus einem Elastomer oder entsprechend elastischen Material gebildet sein, das vorzugsweise abriebfest ist, eine hohe Elastizität aufweist, nicht versprödbar ist und z.B. verträglich mit Schmierstoffen ist. Beim gezeigten Ausführungsbeispiel in Fig. 4 sind die Federelemente 55 als Stege, Leisten, Streifen od.dgl. Einlagen gebildet. Sie sind in Umfangsrichtung zwischen Mitnehmern 56 des Schaltgliedes 28, insbesondere der Kugelhülse 43, einerseits und Mitnehmern 57 des Abtriebteiles 16, insbesondere der Spindel 17, andererseits angeordnet. Die Mitnehmer 56 des Schaltgliedes 28, insbesondere der Kugelhülse 43, bestehen aus Radialvorsprüngen, z.B. Leisten, Stegel, Paßfedern od.dgl., die am Schaltglied 28 auf dessen Innenfläche radial überstehen. In entsprechender Weise können auch die Mitnehmer 57 des Abtriebsteiles 16, insbesondere der Spindel 17, gestaltet sein, die über die Außenfläche der Spindel 17 radial nach außen überstehen. Beim gezeigten Ausführungsbeispiel bestehen die Mitnehmer 57 aus Paßfedern, die in Nuten 58 der Spindel 17 enthalten sind. Ersichtlich ist der Zwischenbereich, der in Umfangsrichtung zwischen den Mitnehmern 56 und 57 vorhanden ist, im wesentlichen ganz mit jeweiligen Federelementen 55 ausgefüllt. Die Dämpfungseinrichtung 43 dämpft die drehmomentübertragende Wirkung zwischen dem Schaltglied 28 und dem Abtriebsteil 16, insbesondere der Spindel 17, in beiden Drehrichtungen. Ersichtlich ist somit das Schaltglied 28 nicht einstückiger Bestandteil der Spindel 17, sondern über die Dämpfungseinrichtung 53 in Umfangsrichtung mit der Spindel 17 gekuppelt. Auf diese Weise wird die zu beschleunigende Masse in zwei Teilmassen aufgeteilt, wobei die kleinere Teilmasse aus dem Schaltglied 28 mit den Kugeln 39 und 40 besteht, während die große Teilmasse aus der Spindel 17 mit deren Mitnehmern 57 in Form der Paßfedern und ferner aus den weiteren Elementen besteht, die in die Aufnahme 18 eingebracht sind, z.B. aus dem in die Aufnahme 18 eingebrachten Spannfutter und dem darin unmittelbar oder über einen Schnellwechseleinsatz gehaltenen Gewindebohrer. Die Dämpfungseinrichtung 53 macht es also möglich, die beschriebene große Teilmasse über die Dämpfungseinrichtung 53 mit großem Beschleunigungsweg relativ sanft in der einen oder anderen Drehrichtung zu beschleunigen und dabei abzudämpfen.

Im Innreren des zweiten Kupplungsteiles 30 ist eine axiale Rückstellfeder 59 enthalten, die mit dem in Fig. 1 linken Ende an einem umlaufenden Abstützteil 9 axial abgestützt ist und mit ihrem anderen Ende an einem Anschlag 60 des Abtriebsteiles 16, insbesondere der Spindel 17, bzw. des Schaltgliedes 28 darauf axial abgestützt ist. Mittels der Rückstellfeder 59 ist das gegen die Wirkung der Rückstellfeder 59 vom ersten Kupplungsteil 29 in Richtung zum zweiten Kupplungsteil 30 bewegte Abtriebsteil 16, insbesondere die Spindel 17, mit dem Schaltglied 28 darauf gegensinnig in die in Fig. 1 gezeigte Stellung rückstellbar. Die Rückstellfeder 59 besteht z.B. aus einer zylindrischen Schraubenfeder, die die Spindel 17 umgibt.

Der erste Kupplungsteil 29 ist als Zylinderhülse 69 ausgebildet, die das Schaltglied 28, insbesondere die Kugelhülse 43, umgreift. Die Zylinderhülse 69 bildet auf ihrer inneren Umfangsfläche 61 eine Anlage- und Abrollfläche für die in deren Inneren befindlichen Eindrehschaltkugeln 29. Die axiale Länge der Zylinderhülse 69 entspricht etwa derjenigen des Schaltgliedes 28, insbesondere der Kugelhülse 43. Als Kupplungselemente 41, die den Kugeln 39 zugeordnet sind, weist der erste Kupplungsteil 29 formschlüssige, mit den Kugeln 39 in Umfangsantriebseingriff bringbare bzw. außer Eingriff bringbare Mitnehmer 62 auf, die als radial nach innen vorspringende Leisten, Stege od.dgl. Schaltnocken ausgebildet sind. Diese Mitnehmer 62 sind an dem Endbereich des ersten Kupplungsteiles 29 angeordnet, der dem zweiten Kupplungsteil 30 abgewandt ist, d.h. am in Fig. 1 rechten Endbereich. Die Mitnehmer 62 schließen mit dem einen Ende des ersten Kupplungsteiles 29, also mit dem in Fig. 1 rechten Ende, ab und erstrecken sich in Richtung zum zweiten Kupplungsteil 30 lediglich über ein kurzes Axialmaß, das z.B. etwa dem Durchmesser der Eindrehschaltkugeln 39 entspricht. Die zum zweiten Kupplungsteil 30 axial hinweisende Kante 63 jedes Mitnehmers 62 verläuft etwa konkav gekrümmt, wobei die Kante 63 zur inneren Umfangsfläche 61 hin bogenförmig ausläuft. Diese Krümmung der Kante 63 ist von besonderem Vorteil für das axiale Einlaufen und Auslaufen der zugeordneten Eindrehschaltkugel 39.

Der zweite Kupplungsteil 30 ist als Zylinderhülse 70 ausgebildet, die im Gehäusedeckel 36 mittels des Lagers 35 frei drehbar gelagert und mit dem Abtrieb 25 in Form des Kegelrades 26 gekoppelt ist. Der so gestaltete zweite Kupplungsteil 30 bildet zumindest auf einem Teil seiner Axialerstreckung mit seiner abgestuften inneren Umfangsfläche 71 eine Anlage- und Abrollfläche für die zugeordneten Ausdrehschaltkugeln 40. Der zweite Kupplungsteil 30 in Form der Zylinderhülse 70 weist als Kupplungselemente 42 formschlüssige, mit den Ausdrehschaltkugeln 40 in Umfangsantriebseingriff bringbare bzw. außer Eingriff damit bringbare Mitnehmer 72 auf, die als radial nach innen vorspringende Leisten, Stege od.dgl. Schaltnocken ausgebildet sind. Die Mitnehmer 72 sind am dem ersten Kupplungsteil 29 zugewandten Endbereich des zweiten Kupplungsteiles 30 angeordnet, d.h. in Fig. 1 am rechten Ende des zweiten Kupplungsteiles 30. Dabei schließen die Mitnehmer 72 mit diesem Ende des zweiten Kupplungsteiles 30 zumindest im wesentlichen ab. Fig. 1 zeigt einen kleinen axialen Abstand des rechten Endes der Mitnehmer 72 vom Ende des zweiten Kupplungsteiles 30. Die Mitnehmer 72 erstrecken sich in der Richtung, die dem ersten Kupplungsteil 29 abgewandt ist, lediglich über ein kurzes Axialmaß, das z.B. etwa dem Durchmesser der Ausdrehschaltkugeln 40 entspricht oder, wie gezeigt, größer als dieser Durchmesser ist. Die Endkante 73 jedes Mitnehmers 72, die zum ersten Kupplungsteil 29 hinweist, verläuft etwa konkav gekrümmt. Sie läuft in der inneren Umfangsfläche 71 des zweiten Kupplungsteiles 30 etwa bogenförmig aus. Dieser bogenförmige Verlauf der Kante 73 der Mitnehmer 72 hat den besonderen Vorteil, daß dadurch das Ein- und Auskuppeln der Ausdrehschaltkugeln 40 und zugeordneten Mitnehmer 72 erleichtert und beschleunigt wird. Zugleich wird der Verschleiß reduziert.
Der erste Kupplungsteil 29 und der zweite Kupplungsteil 30 sind ersichtlich in einer axialen Flucht zueinander angeordnet. Dabei verlaufen die inneren Umfangsflächen 61 bzw. 71, die jeweils Anlage- und Abrollflächen für die zugeordneten Kugeln 39 bzw. 40 bilden, im wesentlichen koaxial zueinander. Die Mitnehmer 62 bzw. 72 laufen, im radialen Schnitt betrachtet, im Fußbereich auf beiden Seiten konkav und somit bogenförmig aus und in die innere Umfangsfläche 61 bzw. 71 ein, was zur Verschleißarmut mit beiträgt.

Nachfolgend ist die Wirkungsweise des Gewindeschneidapparates 10 erläutert. Dabei ist von der in Fig. 1 gezeigten Schaltstellung der Kupplungseinrichtung 27 ausgegangen, die einem Zustand entspricht, bei dem der Antriebsteil 11 über die nicht weiter gezeigte Maschinenspindel der Werkzeugmaschine im Rechtssinn rotatorisch angetrieben wird und zugleich eine in Axialrichtung gemäß Fig.1 von rechts nach links erfolgende Vorschubbewegung erfolgt, wodurch mittels eines nicht weiter gezeigten, im Rechtssinn rotatorisch angetriebenen Gewindebohrers ein Gewinde in ein Werkstück eingeschnitten wird. Das Antriebsmoment im Rechtssinn wird vom Antriebsteil 11, insbesondere Gehäuseteil 13, über den Vorsprung 32 auf den ersten Kupplungsteil 29 in Form der Zylinderhülse 69 übertragen. Die Kupplungselemente 41 in Form der radial nach innen überstehenden Mitnehmer 62 stehen in formschlüssigem Eingriff mit den Kupplungsgliedern 39, die als Eindrehschaltkugeln ausgebildet sind. Über diese Kugeln 39, die in den Nutabschnitten 47 formschlüssig gehalten sind, wird somit das Antriebsmoment auf das Schaltglied 28 und von diesem über dessen Mitnehmer 56 und die Dämpfungseinrichtung 53 auf die Mitnehmer 57 und darüber auf den Abtriebsteil 16 in Form der Spindel 17 übertragen, wodurch also der Gewindebohrer rechtsdrehend und mit Vorschub angetrieben wird.

In angemessener Zeit vor Erreichen des Bohrlochendes wird maschinenseitig der Vorschub abgeschaltet. Die Antriebsdrehbewegung bleibt unverändert aufrechterhalten, bei der ein Antrieb z.B. mit einer Spindeldrehzahl in der Größenordnung von z.B. 2000 U/min erfolgt. Bei gestopptem Vorschub schraubt sich der Gewindebohrer weiter in das Bohrloch ein, wodurch das Abtriebsteil 16, insbesondere die Spindel 17, relativ zum örtlich feststehenden Antriebsteil 11, insbesondere Gehäuseteil 13, axial in Fig. 1 nach links gezogen wird. Mit der Spindel 17 wird das darauf axial fixierte Schaltglied 28 ebenfalls nach links gezogen.

Dabei rollen die Kugeln 39 zwischen dem Nutabschnitt 47 und der inneren Umfangsfläche 61 des ersten Kupplungsteiles 29 ab, wobei die Kugeln 39 eine Bewegung in Fig. 1 nach links vollführen gegen den Ring 50 und gegen die Wirkung der Feder 49. Nach Ausziehen der Spindel 17 um den Durchmesser der Kugeln 39, z.B. von 5 mm, hat sich jede Kugel 39 um den halben Kugeldurchmesser, also z.B. um 2,5 mm, in Fig. 1 nach links durch Abrollen bewegt. Dadurch entsteht vor der Schaltkante 63 jedes Mitnehmers 62 ein Freiraum, der dem Durchmesser der Kugeln 39 entspricht. Ersichtlich rollt also jede Kugel 39 unter geringer Rollreibung bis hin zur Schaltkante 63, von der die Kugel 39 schlagartig dann abgewiesen und in Fig. 1 nach links gestoßen wird, wenn die Schaltkante 63 rechts vom Kugelmittelpunkt der Kugeln 39 sich befindet. Durch die schlagartige Abweisung der Kugeln 39 mittels der Schaltkanten 63 können die Kugeln 39 in den genannten Freiraum ausweichen, ohne ein Restdrehmoment und einen Verschleiß zu verursachen. Mit diesem Ausweichen der Kugeln 39 in den Freiraum wird sprunghaft und schlagartig die Antriebsbewegung vom ersten Kupplungsteil 29 auf das Schaltglied 28, insbesondere die Kugelhülse 43, und von dieser auf die Spindel 17 unterbrochen. Der Drehantrieb im Rechtssinn für den Gewindebohrer stoppt somit. Gleichwohl läuft das Drehrichtungsumkehrgetriebe 21 unverändert im eingangs beschriebenen Sinn weiter, da die maschinenseitige Antriebsdrehung im Rechtssinn unverändert aufrechterhalten wird. Beim Ausziehen der Spindel 17 in Fig. 1 nach links hin wird die Rückstellfeder 59 in entsprechendem Maße zusammengedrückt und weiter gespannt.

Sodann kann maschinenseitig eine zur Vorschubbewegung gegensinnige Axialbewegung im Sinne des Herausziehens des Gewindebohrers aus dem Rohrloch erfolgen. Dabei wird die Spindel 17 gegen die Wirkung der Rückstellfeder 59 noch weiter ausgezogen, soweit, bis die zweiten Kupplungsglieder 30 insbesondere Ausdrehschaltkugeln, über die Kante 73 hinweg in formschlüssigen Eingriff mit den Mitnehmern 72 des zweiten Kupplungsteiles 30, insbesondere der Zylinderhülse 70, gelangen. Sofern der formschlüssige Eingriff noch nicht erfolgtist, werden die Kugeln 40 an den Kanten 73 der Mitnehmer 72 abgewiesen, gegen die Wirkung der Feder 49. Dieses Abweisen mit axialer Federung erfolgt, bis die Kugeln 30 über ihre Kugelmitte hinweg in den Bereich der Mitnehmer 72 eingefedert sind und von diesen dann formschlüssig mitgenommen werden. Da der zweite Kupplungsteil 30, angetrieben vom Abtrieb 25 in Form des Kegelrades 26, gegensinnig zur Antriebsdrehrichtung, also im Linkslauf, umläuft, wird nun bei Kupplung des Schaltgliedes 28 mit dem zweiten Kupplungsteil 30 die Spindel 17 im Linkslauf angetrieben. Beim Eingreifen der Kugeln 40 und Einkuppeln in den zweiten Kupplungsteil 30 muß aufgrund großer Drehzahldifferenz eine große Beschleunigung erfolgen. Hier wirkt sich die Dämpfungseinrichtung 53 günstig aus. Es wird ein Verschleiß bzw. eine plastische Verformung zwischen den Kugeln 30, dem zugeordneten Nutabschnitt 48 des Schaltgliedes 28 und den Mitnehmern 56 am Schaltglied 28 vermieden, da die Dämpfungseinrichtung 53 in Umfangsrichtung dämpfend wirkt. In diesem eingekuppelten Zustand der Kugeln 40 in den zweiten Kupplungsteil 30 wird der Gewindebohrer linksdrehend aus dem Bohrloch herausgedreht. Ist der Gewindebohrer aus dem Bohrloch herausgedreht, wird die Spindel 17 damit frei, so daß die Rückstellfeder 59 die Spindel 17 wieder in Fig. 1 nach rechts in die Ausgangsstellung in den Gehäuseteil 13 hineinschieben kann. Dabei gelangen die Kugeln 40 außer Eingriff mit den Mitnehmern 72 des zweiten Kupplungsteiles 30. Die anderen Kugeln 39 können auch hier wieder durch ihre weiche Abfederung und ihre kleine Masse von den zugeordneten Mitnehmern 62, insbesondere deren Schaltkante 63, bis zum Einkuppeln axial leicht abgefedert werden. Die kleine und große Masse, die das Schaltglied 28 bzw. die Spindel 17 darstellt, werden beim Einklinken der Kugeln 40 in die in Fig. 1 gezeigte Ausgangsstellung in die zugeordneten Mitnehmer 62 abgedämpft beschleunigt.

## Patentansprüche

1. Gewindeschneidapparat, mit einem mittels einer Maschinenspindel antreibbaren und davon axial bewegbaren Antriebsteil (11), mit einem relativ zum Antriebsteil (11) axial verschiebbaren Abtriebsteil (16, 17) zum Antrieb einer einen Gewindebohrer aufnehmenden Aufnahme (18) und mit einer umschaltbaren formschlüssigen Kupplungseinrichtung (27), die ein mit dem Abtriebsteil (16) verbundenes Schaltglied (28) mit darin formschlüssig gehaltenen und geführten Kupplungsgliedern sowie mindestens einen vom Antriebsteil (11) angetriebenen Kupplungsteil aufweist, wobei aufgrund einer axialen Relativverschiebung zwischen dem Abtriebsteil (16) mit Schaltglied (28) einerseits und dem mindestens einen Kupplungsteil andererseits wahlweise ein Kupplungsteil mit daran ausgebildeten Kupplungselementen über die Kupplungsglieder mit dem Abtriebsteil (16, 17) in formschlüssigen Kupplungseingriff oder in eine nicht angetriebene Zwischenstellung bringbar ist,
**dadurch gekennzeichnet,**
daß das Schaltglied (28) als mit dem Abtriebsteil (16, 17) axial verschiebefest verbundene Kugelhülse (43) ausgebildet ist, die über in Nuten des Abtriebsteils (16,17) eingreifende radiale Mitnehmer (56) mit dem Abtriebsteil (16,17) in Umfangsrichtung formschlüssig gekuppelt ist und darüber den Abtriebsteil (16,17) antreibt, daß die Kugelhülse (43) auf ihrer Außenseite etwa achsparallele Nuten ((45,47,48) aufweist, in denen die Kupplungsglieder (39,40), insbesondere Kugeln, axial beweglich und in Umfangsrichtung formschlüssig aufgenommen sind und daß in Umfangsrichtung zwischen der Kugelhülse (43) und dem Abtriebsteil (16,17) eine in vorzugsweise beiden Drehrichtungen federelastische Dämpfungseinrichtung (53) angeordnet ist.

2. Gewindeschneidapparat nach Anspruch 1,
**dadurch gekennzeichnet**,
daß die Kugelhülse (43) koaxial zu dem mindestens einen Kupplungsteil (29,30) und axial derart angeordnet ist, daß die Kugelhülse (43) in einer axialen Relativstellung des Abtriebsteiles (16) sich in einer Axialposition in Eingriff mit dem Kupplungsteil und in einer anderen, axialen Relativstellung des Abtriebsteiles (16) sich in einer nicht angetriebenen Zwischenstellung befindet.

3. Gewindeschneidapparat nach Anspruch 1 oder 2,
**dadurch gekennzeichnet**,
daß ein erster Kuplungsteil (29) und ein zweiter Kupplungsteil (30) und jeweils zugeordnete Kupplungsglieder (39 bzw. 40) vorgesehen sind und daß aufgrund der axialen Relativverschiebung zwischen dem Abtriebsteil (16) mit Kugelhülse (43) einerseits und den beiden Kupplungsteilen (29,30) andererseits wahlweise der erste Kupplungsteil (29) oder der Zweite Kupplungsteil (30) mit den daran ausgebildeten Kupplungselementen (41,62 bzw. 42,72) über die Kupplungsglieder (39,40) in Kupplungseingriff bringbar ist.

4. Gewindeschneidapparat nach Anspruch 3,
**dadurch gekennzeichnet**,
daß die Kugelhülse (43) koaxial zu beiden Kupplungsteilen (29,30) und axial derart zwischen beiden Kupplungsteilen (29,30) angeordnet ist, daß die Kugelhülse (43) in der einen axialen Relativstellung sich in Eingriff mit dem ersten Kupplungsteil (29) und in der anderen axialen Relativstellung sich in einer anderen, entgegengesetzten Axialposition und in Eingriff mit dem zweiten Kupplungsteil (30) befindet.

5. Gewindeschneidapparat nach einem der Ansprüche 1 bis 4,
**dadurch gekennzeichnet**,
daß ein vom Antriebsteil (11) angetriebenes Drehrichtungsumkehrgetriebe (21) vorgesehen ist, mit dessen angetriebenem Teil der erste Kupplungsteil (29) und mit dessen Abtrieb (25) der zweite Kupplungsteil (30) verbunden ist.

6. Gewindeschneidapparat nach einem der Ansprüche 1 bis 5,
**dadurch gekennzeichnet,**
daß die Kugelhülse (43) drei in etwa gleichen Umfangswinkelabständen voneinander angeordnete Nuten (45, 47, 48) enthält.

7. Gewindeschneidapparat nach einem der Ansprüche 1 bis 6,
**dadurch gekennzeichnet,**
daß in jeder Nut (45) der Kugelhülse (43) zumindest ein Kupplungsglied (39, 40), insbesondere eine Kugel, formschlüssig und beweglich gehalten ist, das bzw. die mit einem Teil, insbesondere Kugelteil, über die Außenseite der Kugelhülse (43) übersteht.

8. Gewindeschneidapparat nach einem der Ansprüche 1 bis 7,
**dadurch gekennzeichnet,**
daß die Kugelhülse (43) in der jeweiligen Nut (45) zwei axial beabstandete Kugeln (39, 40) enthält, von denen die eine Kugel (39) als Eindrehschaltkugel vorgesehen und dem ersten Kupplungsteil (29) zugeordnet ist und mit diesem in formschlüssigen Eingriff bzw. außer Eingriff damit bringbar ist und von denen die andere Kugel (40) als Ausdrehschaltkugel vorgesehen und dem zweiten Kupplungsteil (30) zugeordnet ist und mit diesem in formschlüssigen Eingriff bzw. außer Eingriff damit bringbar ist.

9. Gewindeschneidapparat nach Anspruch 8,
**dadurch gekennzeichnet,**
daß auf dem Axialbereich zwischen beiden Kupplungsgliedern (39, 40), insbesondere Kugeln, eine Feder (49) angeordnet ist, mittels der beide Kupplungsglieder (39, 40) in etwa achsparalleler Richtung voneinanderweg federelastisch beaufschlagbar sind.

10. Gewindeschneidapparat nach Anspruch 9,
**dadurch gekennzeichnet,**
daß auf dem Axialbereich zwischen beiden Kupplungsgliedern (39, 40), insbesondere Kugeln, je Kupplungsglied (39, 40) ein Ring (50, 51) angeordnet ist, der mittels der Feder (49) gegen das jeweilige Kupplungsglied (39, 40), insbesondere die jeweilige Kugel, angedrückt ist.

11. Gewindeschneidapparat nach Anspruch 10,
**dadurch gekennzeichnet,**
daß der Ring (50), der der Eindrehschaltkugel (39) zugeordnet ist, an einem Radialvorsprung (52), z.B. einer Radialschulter, der Kugelhülse (43) und dabei je nach Position der Eindrehschaltkugel (39) in der Nut (45, 47) in axialem Abstand von der Eindrehschaltkugel (39) formschlüssig abstützbar ist.

12. Gewindeschneidapparat nach einem der Ansprüche 1 bis 11,
**dadurch gekennzeichnet,**
daß die beiden in jeweils einer Nut (45) der Kugelhülse (43) enthaltenen Kupplungsglieder (39, 40), insbesondere Kugeln, durch einen z.B. einstückigen Vorsprung (46) in der Nut (45) voneinander separiert sind oder in jeweils zwei eigenen Längsnuten (47, 48) auf der Außenseite der Kugelhülse (43) enthalten sind.

13. Gewindeschneidapparat nach Anspruch 12,
**dadurch gekennzeichnet,**
daß der je Kugel (39, 40) vorgesehene Nutabschnitt (47, 48) ein größeres Axialmaß als der Kugeldurchmesser aufweist.

14. Gewindeschneidapparat nach Anspruch 12 oder 13,
**dadurch gekennzeichnet,**
daß der Nutabschnitt (47), in dem die Eindrehschaltkugel (39) enthalten ist, ein etwa um das zwei- bis dreifache, z.B. 2,5-fache, größeres Axialmaß als der Kugeldurchmesser aufweist.

15. Gewindeschneidapparat nach einem der Ansprüche 12 bis 14,
**dadurch gekennzeichnet,**
daß der Nutabschnitt (48), in dem die Ausdrehschaltkugel (40) enthalten ist, ein etwa um das ein- bis zweifache, z.B. 1,5-fache, größeres Axialmaß als der Kugeldurchmesser aufweist.

16. Gewindeschneidapparat nach Anspruch 1,
**dadurch gekennzeichnet,**
daß die Dämpfungseinrichtung (53) in Umfangsrichtung federnde Dämpfer (54) aufweist.

17. Gewindeschneidapparat nach Anspruch 1 oder 16,
**dadurch gekennzeichnet,**
daß die Dämpfungseinrichtung (53) in Umfangsrichtung federnde Federelemente (55) aufweist.

18. Gewindeschneidapparat nach Anspruch 17,
**dadurch gekennzeichnet,**
daß die Federelemente (55) jeweils aus einem Elastomer gebildet sind.

19. Gewindeschneidapparat nach Anspruch 17 oder 18,
**dadurch gekennzeichnet,**
daß die Federelemente (55) als Stege, Leisten, Streifen oder dergleichen Einlagen gebildet sind, die in Umfangsrichtung zwischen Mitnehmern (56), der Kugelhülse (43) und Mitnehmern (57) des Abtriebsteils (16), insbesondere der Spindel (17), angeordnet sind, und vorzugsweise daß die Federelemente (55) sich an zumindest einem Ende zum Ende hin im Querschnitt in axialer und/oder radialer Richtung verringern.

20. Gewindeschneidapparat nach Anspruch 19,
**dadurch gekennzeichnet,**
daß die Mitnehmer (56, 57), die zwischen den Federelementen (55) angeordnet sind, aus Radialvorsprüngen, z.B. Leisten, Stegen, Paßfedern od. dgl. der Kugelhülse (43) und des Abtriebsteils (16), insbesondere Spindel (17), gebildet sind.

21. Gewindeschneidapparat nach einem der Ansprüche 1 bis 20,
**dadurch gekennzeichnet,**
daß zwischen einem umlaufenden Abstützteil (9) einerseits und einem Anschlag (60) des Abtriebsteiles (16), insbesondere der Spindel (17) oder der Kugelhülse (43) darauf andererseits, eine axiale Rückstellfeder (59) angeordnet ist, mittels der das gegen die Wirkung der Rückstellfeder (59) vom ersten Kupplungsteil (29) in Richtung zum zweiten Kupplungsteil (30) bewegte Abtriebsteil (16), insbesondere die Spindel (17), mit der Kugelhülse (43) darauf gegensinnig zurückstellbar ist.

22. Gewindeschneidapparat nach einem der Ansprüche 1 bis 21,
**dadurch gekennzeichnet,**
daß der erste Kupplungsteil (29) als Zylinderhülse (69) ausgebildet ist, die die Kugelhülse (43) umgreift und auf ihrer inneren Umfangsfläche (61) eine Anlage- und Abrollfläche für die Eindrehschaltkugeln (39) bildet, und daß die axiale Länge der Zylinderhülse (69) etwa derjenigen der Kugelhülse (43) entspricht.

23. Gewindeschneidapparat nach einem der Ansprüche 1 bis 22,
**dadurch gekennzeichnet,**
daß der erste Kupplungsteil (29) als Kupplungselemente (41) formschlüssige, mit den Eindrehschaltkugeln (39) in Umfangsantriebseingriff bringbare bzw. außer Eingriff damit bringbare Mitnehmer (62) aufweist, die am dem zweiten Kupplungsteil (30) abgewandten Endbereich des ersten Kupplungsteiles (29) angeordnet sind.

24. Gewindeschneidapparat nach Anspruch 23,
**dadurch gekennzeichnet,**
daß die Mitnehmer (62) mit dem einen Ende des ersten Kupplungsteiles (29) abschließen und sich zum zweiten Kupplungsteil (30) hin lediglich über ein kurzes Axialmaß erstrecken, das z.B. etwa dem Durchmesser der Eindrehschaltkugeln (39) entspricht.

## Claims

1. A threading apparatus with a driving member (11) operable by means of a machine spindle from which it is axially mobile, with a driven member (16, 17) axially movable relative to the driving member (11), for driving a tap drill receiving fixture (18), and with a reversible positive coupling device (27) which has a contact element (28) connected to the driven member (16), which comprises coupling links kept positive and driven, as well as at least one coupling member driven by the driving member (11), whereby as a result of an axial relative movement between the driven member (16) and the contact element (28) on one side and the at least one coupling member on the other side, one coupling member with coupling elements trained thereon may be brought either into positive coupling engagement or into a non-driven intermediate position by the coupling links of the driven member (16, 17), **characterised in that** the contact element (28) is formed as an axially non-displaceable ball bush (43) connected to the driven member (16, 17), which is positively coupled in a peripheral direction with the driven member (16, 17) by engaging radial catches (56) in the grooves of the driven member (16, 17), and thereby drives the driven member (16, 17), that the ball bush (43) has grooves on its exterior roughly parallel to the axis (45, 47, 48) in which the coupling links (39, 40), specifically balls, are axially mobile and in a peripheral direction are positively received, and that a spring elastic damping device (53) preferably in both directions of rotation is positioned in the peripheral direction between the ball bush (43) and the driven member (16, 17).

2. The threading apparatus according to Claim 1, **characterised in that** the ball bush (43) is arranged coaxially to the at least one coupling member (29, 30) and axially in such a way, that the ball bush (43) in one axial relative position of the driven member (16) is in an axial position in engagement with the coupling member and in a different axial relative position of the driven member (16) is in a non-driven intermediate position.

3. The threading apparatus according to Claim 1 or 2, **characterised in that** a first coupling member (29) and a second coupling member (30) and their respectively assigned coupling links (39 or 40) are provided, and that as a result of the axial relative displacement between the driven member (16) and the ball bush (43) on one side and both coupling members (29, 30) on the other side, either the first coupling member (29) or the second coupling member (30) with the coupling elements (41, 62 or 42, 72) trained thereon may be brought into coupling engagement by the coupling links (39, 40).

4. The threading apparatus according to Claim 3, **characterised in that** the ball bush (43) is positioned coaxially to both coupling members (29, 30) and axially in such a way between both coupling members (29, 30), that the ball bush (43) in one axial relative position is engaged with the first coupling member (29) and in the other axial relative position is in a different, opposite axial position and engaged with the second coupling member (30).

5. The threading apparatus according to one of Claims 1 to 4 **characterised in that** a rotation reversing gear (21) driven by the driving member (11) is provided, the driven part of which is connected to the first coupling member (29) and the output (25) of which is connected to the second coupling member (30).

6. The threading apparatus according to one of Claims 1 to 5, **characterised in that** the ball bush (43) contains three grooves (45, 47, 48) arranged at roughly the same circumferential angular distance from one another.

7. The threading apparatus according to one of Claims 1 to 6 **characterised in that** in each groove (45) of the ball bush (43) at least one coupling link (39, 40), specifically a ball, is kept interlocking and movable which projects in part, specifically the ball part, beyond the exterior of the ball bush (43).

8. The threading apparatus according to one of Claims 1 to 7 **characterised in that** in the respective groove (45) the ball bush (43) contains two axially spaced balls (39, 40) of which one ball (39) is intended as a turning in connecting ball and is assigned to the first coupling member (29) with which it may be positively engaged or disengaged and of which the other ball (40) is intended as an turning out connecting ball and is assigned to the second coupling member (30) with which it may be positively engaged or disengaged.

9. The threading apparatus according to Claim 8 **characterised in that** a spring (49) is arranged on the axial area between both coupling links (39, 40), specifically balls, by means of which both coupling links (39, 40) may be spring elastically compressed away from each other in a direction roughly parallel to the axis.

10. The threading apparatus according to Claim 9 **characterised in that** for each coupling link (39, 40) a ring (50, 51) is arranged on the axial area between both coupling links (39, 40), specifically balls, which is pressed against the respective coupling link (39, 40), specifically the respective ball, by means of the spring (49).

11. The threading apparatus according to Claim 10 **characterised in that** depending on the position of the turning in connecting ball (39) in the groove (45, 47) at an axial distance from the turning in ball (39), the ring (50) assigned to the turning in connecting ball (39) is positively supportable on a radial projection (52), e.g. a radial connector, of the ball bush (43).

12. The threading apparatus according to one of Claims 1 to 11 **characterised in that** both coupling links (39, 40), specifically balls, respectively contained in a groove of the ball bush (43), are separated from one another in the groove (45), by e.g. a one piece projection (46) or are contained respectively in their own two longitudinal grooves (47, 48) on the exterior of the ball bush (43).

13. The threading apparatus according to Claim 12 **characterised in that** the intended groove section (47, 48) of each ball (39, 40) has a larger axial range than the diameter of the ball.

14. The threading apparatus according to Claim 12 or 13, **characterised in that** the groove segment (47) in which the turning in connecting ball (39) is contained has an axial range roughly two to three times, e.g. 2.5 times greater than the ball diameter.

15. The threading apparatus according to one of Claims 12 to 14, **characterised in that** the groove segment (48) in which the turning out ball (40) is contained has an axial range roughly one to two times, e.g. 1.5 times greater than the diameter of the ball.

16. The threading apparatus according to Claim 1 **characterised in that** the damping device (53) has sprung dampers (54) in a peripheral direction.

17. The threading apparatus according to Claim 1 or 16 **characterised in that** the damping device (53) has sprung spring elements (55) in a peripheral direction.

18. The threading apparatus according to Claim 17 **characterised in that** each of the spring elements (55) is formed from an elastomer.

19. The threading apparatus according to Claim 17 or 18 **characterised in that** the spring elements (55) are formed as straps, strips, bands or similar inserts which are arranged in a peripheral direction between the catches (56) of the ball bush (43) and the catches (57) of the driven member (16), specifically of the spindle (17), and preferably that the spring elements (55) in cross-section decrease at least at one end towards the end in an axial and/or radial direction.

20. The threading apparatus according to Claim 19 **characterised in that** the catches (56, 57) that are arranged between the spring elements (55) are formed from radial projections of the ball bush (43), e.g. strips, straps, adjusting springs or similar and the driven member (16), specifically the spindle (17).

21. The threading apparatus according to one of Claims 1 to 20 **characterised in that** between one revolving support member (9) on one side and a stop (60) of the driven member (16), specifically of the spindle (17) or of the ball bush (43) on top on the other side, an axial restoring spring (59) is positioned, by means of which the moving driven member (16), specifically the spindle (17) with the ball bush (43) on top, which counters the effect of the restoring spring (59) of the first coupling member (29) in the direction of the second coupling member (30), is restorable in an opposite direction.

22. The threading apparatus according to one of Claims 1 to 21 **characterised in that** the first coupling member (29) is in the form of a cylinder sleeve (69) which encircles the ball bush (43) and forms a contact and unrolling surface on its inner peripheral area (61) for the turning in connecting balls (39) and that the axial length of the cylinder sleeve (69) corresponds roughly to that of the ball bush (43).

23. The threading apparatus according to one of Claims 1 to 22 **characterised in that** the first coupling member (29) has as coupling elements (41) interlocking catches (62) which may be brought into peripheral drive engagement or disengagement with the turning in connecting balls (39), which are positioned at the end part of the first coupling member (29) averted from the second coupling member (30).

24. The threading apparatus according to Claim 23 **characterised in that** the catches (62) terminate at the one end of the first coupling member (29) and only extend to the second coupling member (30) by a short axial range that corresponds e.g. roughly to the diameter of the turning in connecting balls (39).

## Revendications

1. Appareil à tarauder, avec une partie entraînement (11) susceptible d'être entraînée au moyen d'une broche de machine et d'être déplacée axialement à partir d'elle, avec une partie entraînée (16, 17) déplaçable axialement par rapport à la partie entraînement (11), pour assurer l'entraînement, d'un réceptacle (19) recevant un taraud, et avec un dispositif de couplage (27), agissant par ajustement de forme, pouvant être commuté, présentant un organe de commutation (28), relié à la partie entraînée (16), avec des organes de couplage y étant maintenus et guidés avec ajustement de forme, ainsi qu'au moins une partie de couplage entraînée par la partie entraînement (11), au choix une partie de couplage, avec des éléments de couplage réalisée sur elle, étant susceptible d'être placée en contact de couplage avec ajustement de forme, avec la partie entraînée (16, 17), par l'intermédiaire des organes de couplage ou bien dans une position intermédiaire, non entraînée, du fait d'un déplacement relatif axial entre la partie entraînée (16) avec l'organe de commutation (28), d'une part, et la au moins une partie de couplage, d'autre part, caractérisé en ce que l'organe de commutation (28) est réalisé sous forme de manchon à billes (43) relié, en étant assujetti axialement, à la partie entraînée (16, 17) et couplée avec ajustement de forme en direction périphérique à la partie entraînée (16, 17) par l'intermédiaire d'organes d'entraînement (56), s'engageant radialement dans des rainures de la partie entraînée (16, 17) et entraînant de plus la partie entraînée (16, 17), en ce que le manchon à billes (43) présente sur sa face extérieure des rainures (45, 47, 48) à axes à peu près parallèles, dans lesquelles les organes de couplage (39, 40), en particulier des billes, sont reçues, mobiles axialement et avec ajustement de forme en direction périphérique, et en ce qu'un dispositif d'amortissement (53), ayant l'élasticité d'un ressort, de préférence dans les deux sens de rotation, est disposé, dans la direction périphérique, entre le manchon à billes (43) et la partie entraînée (16, 17).

2. Appareil à tarauder selon la revendication 1, caractérisé en ce que le manchon à billes (43) est disposé coaxialement par rapport à la au moins une partie de couplage (29, 30) et axialement, de manière que le manchon à billes (43), dans une première position relative axiale de la partie entraînée (16), se trouve dans une position axiale où il y a contact avec la partie de couplage et, dans une deuxième position relative axiale de la partie entraînée 16, se trouve dans une position intermédiaire, non entraînée.

3. Appareil à tarauder selon la revendication 1 ou 2, caractérisé en ce qu'une première partie de couplage (29) et une deuxième partie de couplage (30) et des organes de couplage (39), respectivement (40), respectivement associés sont prévus, et en ce que, du fait du déplacement rotatif axial entre la partie entraînée (16) avec le manchon à billes (43), d'une part, et les deux parties de couplage (29, 30), d'autre part, à volonté, la première partie de couplage (29), ou bien la deuxième partie de couplage (30) avec les éléments de couplage (41, 62) respectivement (42, 72) réalisés sur elle, est susceptible d'être mise en contact de couplage par l'intermédiaire des organes de couplage (39, 40).

4. Appareil à tarauder selon la revendication 3, caractérisé en ce que le manchon à billes (43) est disposé coaxialement par rapport aux deux parties de couplage (29, 30) et axialement, entre les deux parties de couplage (29, 30), de manière que le manchon à billes (43), dans une première position relative axiale, se trouve en contact avec la première partie de couplage (29) et, dans l'autre position relative axiale, se trouve dans une autre position axiale, opposée, et en contact avec la deuxième partie de couplage (30).

5. Appareil à tarauder selon l'une des revendications 1 à 4, caractérisé en ce qu'est prévue une transmission à inversion du sens de rotation (21) entraînée par la partie entraînement (11), à la partie d'entraînement de laquelle est reliée la première partie de couplage (29) et à la partie entraînée (25) de laquelle est reliée la deuxième partie de couplage (30).

6. Appareil à tarauder selon l'une des revendications 1 à 5, caractérisé en ce que le manchon à billes (43) contient trois rainures (45, 47, 48) disposées selon des espacements angulaires périphériques à peu près égaux les uns par rapport aux autres.

7. Appareil à tarauder selon l'une des revendications 1 à 6, caractérisé en ce que, dans chaque rainure (45) du manchon à billes (43), est maintenu, avec ajustement de forme et mobile, au moins un organe de couplage (39, 40), en particulier une bille, qui fait saillie, par une partie, en particulier une partie sphérique, sur la face extérieure du manchon à billes (43).

8. Appareil à tarauder selon l'une des revendications 1 à 7, caractérisé en ce que le manchon à billes (43), contient, dans la rainure (45), respective deux billes (39, 40) espacées axialement, dont une première bille (39) est prévue à titre de bille de commutation de mise en de pénétration et est associée à la première partie d'accouplement (29) et peut être placée, à l'aide de cette bille, en ou hors de contact avec ajustement de forme avec la partie de couplage, et dont l'autre bille (40) est prévue à titre de bille de mise en rotation de sortie et associée à la deuxième partie de couplage (30), et peut être mise en respectivement hors de contact avec ajustement de forme, à l'aide de cette bille, avec cette partie de couplage.

9. Appareil à tarauder selon la revendication 8, caractérisé en ce qu'un ressort (49), au moyen duquel les deux organes de couplage (39, 40) peuvent être sollicités avec l'élasticité d'un ressort pour s'écarter l'un de l'autre en direction à peu près parallèle à l'axe, est disposé sur la zone axiale située entre les deux organes de couplage (39, 40), en particulier des billes.

10. Appareil à tarauder selon la revendication 9, caractérisé en ce que, sur la zone axiale située entre les deux organes de couplage (39, 40), en particulier des billes, est disposée, pour chaque organe de couplage (39, 40), une bague (50, 51) pressant, au moyen du ressort (49), contre l'organe de couplage (39, 40) respectif, en particulier la bille respective.

11. Appareil à tarauder selon la revendication 10, caractérisé en ce que la bague (50) associée à la bille de mise en rotation de pénétration (39) peut prendre appui avec ajustement de forme sur une saillie radiale (52), par exemple un épaulement radial, de la douille à billes (43) et, alors, prendre appui avec ajustement de forme, selon la position de la bille de mise en rotation de pénétration (39) dans la rainure (45, 47) à distance axiale de la bille de mise en rotation de pénétration (39).

12. Appareil à tarauder selon l'une des revendications 1 à 11, caractérisé en ce que les deux organes de couplage (39, 40), en particulier des billes, contenues chacune dans une rainure (45) du manchon à billes (43), sont séparées l'une de l'autre au moyen d'une saillie (46), par exemple d'un seul tenant, ménagée dans la rainure (45) ou en étant dans chacune des deux rainures longitudinales (47, 48) propres, en face extérieure du manchon à billes (43).

13. Appareil à tarauder selon la revendication 12, caractérisé en ce que le tronçon de rainure (47, 48) prévu pour chaque bille (39, 40) présente une dimension axiale supérieure au diamètre de bille.

14. Appareil à tarauder selon la revendication 12 ou 13, caractérisé en ce que le tronçon de rainure (47), dans lequel est contenue la bille de mise en rotation de pénétration (39), a une dimension axiale faisant à peu près de 2 à 3 fois, par exemple 2,5 fois, le diamètre de bille.

15. Appareil à tarauder selon l'une des revendications 12 à 15, caractérisé en ce que le tronçon de rainure (48), dans lequel est contenue la bille de mise en rotation de sortie (40), présente une distance axiale faisant à peu près de 1 à 2 fois, par exemple 1,5 fois, le diamètre de bille.

16. Appareil à tarauder selon la revendication 1, caractérisé en ce que le dispositif d'amortissement (53) présente des amortisseurs (54) assurant un effet élastique en direction périphérique.

17. Appareil à tarauder selon la revendication 1 ou 16, caractérisé en ce que le dispositif d'amortissement (53) présente des éléments élastiques (55) assurant un effet élastique en direction périphérique.

18. Appareil à tarauder selon la revendication 17, caractérisé en ce que les éléments élastiques (55) sont chacun réalisés en un élastomère.

19. Appareil à tarauder selon la revendication 17 ou 18, caractérisé en ce que les éléments élastiques (55) sont réalisés sous forme de nervures, bandes, barrettes ou inserts analogues, disposés en direction périphérique, entre les organes d'entraînement (56), le manchon à billes (43) et les organes d'entraînement (57) de la partie entraînée (16), en particulier de la broche (17), et, de préférence, en ce que les éléments élastiques (55) ont une section transversale en au moins une extrémité allant en diminuant en direction axiale et/ou radiale.

20. Appareil à tarauder selon la revendication 19, caractérisé en ce que sur les organes d'entraînement (56, 57) disposés entre les éléments élastiques (55) sont constitués par des saillies radiales, par exemple des bandes, des nervures, des clavettes ou analogues, du manchon à billes (43) et de la partie entraînée (16), en particulier de la broche (17).

21. Appareil à tarauder selon l'une des revendications 1 à 20, caractérisé en ce qu'entre une partie d'appui (9) circulaire, d'une part, et une butée (60) de la partie d'entraînement (16), en particulier de la broche (17) ou du manchon à billes (43), d'autre part, sur cette partie est disposé un ressort de rappel axial (59) au moyen duquel la partie entraînée déplacée à l'encontre de l'action du ressort de rappel (59) par la première partie de couplage (29), en direction de la deuxième partie de couplage (30), en particulier la broche (17), est susceptible d'être rappelée, en sens inverse, avec le manchon à billes (43).

22. Appareil à tarauder selon l'une des revendications 1 à 21, caractérisé en ce que la première partie de couplage (29), est réalisée sous forme de manchon à billes (69) entourant le manchon à billes (43) et constituant sur sa surface périphérique intérieure (61) une surface d'appui et de roulement pour les billes de mise en rotation de pénétration (39), et en ce que la longueur axiale du manchon cylindrique (69) correspond à peu près à celle du manchon à billes (43).

23. Appareil à tarauder selon l'une des revendications 1 à 22, caractérisé en ce que la première partie de couplage (29) présente des organes d'entraînement (62), réalisés sous forme d'éléments de couplage (41), susceptibles d'être mis avec elle en contact ou hors contact d'entraînement périphérique avec les billes de mise en rotation de pénétration (39), ces éléments d'entraînement (62) étant disposés sur la zone d'extrémité opposée à la deuxième partie de couplage (30) de la première partie de couplage (29).

24. Appareil à tarauder selon la revendications 23, caractérisé en ce que les organes d'entraînement (62) sont délimités par une extrémité de la première partie de couplage (29) et s'étendent en direction de la deuxième partie de couplage (30) seulement sur une courte distance axiale, correspondant par exemple à peu près au diamètre des billes de mise en rotation de pénétration (39).
